# EUROPÄISCHE PATENTSCHRIFT

(11) **EP 1 202 887 B1**
(45) Veröffentlichungstag und Bekanntmachung des Hinweises auf die Patenterteilung: **02.08.2006**
(21) Anmeldenummer: 00953166.6
(22) Anmeldetag: 11.08.2000
(51) Int. Cl.: B60S 1/52

(54) **DÜSENTRÄGER MIT EINER ABDECKKAPPE**
NOZZLE SUPPORT WITH A CAP
SUPPORT DE BUSE POURVU D'UN CAPUCHON

(30) Priorität: 17.08.1999 DE 19938992
(43) Veröffentlichungstag der Anmeldung: 08.05.2002
(73) Patentinhaber: Bayerische Motoren Werke Aktiengesellschaft, 80809 München (DE)
(72) Erfinder: LEIPZIGER, Alfred, 84048 Mainburg (DE)
(74) Vertreter: Schernhammer, Herbert
(86) Internationale Anmeldenummer: PCT/EP2000/007828
(87) Internationale Veröffentlichungsnummer: WO 2001/012482

(56) Entgegenhaltungen:
- DE-A- 4 401 744
- DE-A- 19 920 965
- FR-A- 2 705 075
- FR-A- 2 749 553

## Beschreibung

Die Erfindung betrifft einen Düsenträger mit einer Abdeckkappe für eine Scheinwerfer-Waschvorrichtung nach dem Oberbegriff der Ansprüche 1 und 4 und einen Düsenträger nach Anspruch 7.

Aus der DE 43 28 570 C2 ist eine Abdeckkappe bekannt, die mittels eines Kugelgelenkes am Düsenträger angeordnet ist und sich hierdurch in der Karosserieöffnung so ausrichten kann, dass die Karosserieöffnung in der eingefahrenen Position des Düsenträgers mit gleichmäßigem Fugenbild und/oder oberflächenbündig verschlossen wird.

Aus der FR 2 749 553 A1, die hinsichtlich der Ansprüche 1 und 4 den nächstliegenden Stand der Technik bildet, ist eine Abdeckkappe bekannt, die über ein elastisches Element mit dem Düsenträger verbunden ist und sich beim Einfahren des Düsenträgers selbsttätig in der Karosserieöffnung ausrichtet.

Die nicht vorveröffentlichte EP 1 031 481 A2, die den nächstliegenden Stand der Technik für Anspruch 7 bildet, beschreibt einen Düsenträger mit einer Abdeckkappe, die über zwei etwa senkrecht zueinander angeordnete Schwenkachsen mit dem Düsenträger verbunden ist, wodurch sich die Abdeckkappe beim Einfahr des Düsenträgers selbsttätig in der Karosserieöffnung ausrichtet.

EP 1 031 481 A2 gilt als Stand der Technik im Sinne von Artikel 54(3) und (4) EPÜ, wobei EP-1 031 481 A2 für die Frage der erfinderischen Tätigkeit nicht von Bedeutung ist.

Ferner ist aus der DE 44 01 744 A1 ein Düsenträger bekannt, der einen Kupplungsabschnitt zur Anbindung einer Abdeckkappe aufinreist, mit einer Klemme nach Art einer Kugelpfanne, durch die sich die Abdeckkappe bei Toleranzfehlem in der Karosserieöffnung ausrichten kann.

Aufgabe der Erfindung ist es, den bekannten Düsenträger weiterzubilden.

Diese Aufgabe wird durch die Merkmale der Ansprüche 1, 4 oder 7 jeweils für sich oder in Kombination gelöst.

Kerngedanke hierbei ist, die Abdeckkappe über wenigstens ein langgestrecktes elastisches Element oder eine Schraubenfeder bzw. über wenigstens eine Schwenkachse so mit dem Düsenträger zu verbinden, daß sich nach jedem Reinigungsvorgang und der sich anschließenden Rückbewegung des Düsenträgers in seine eingefahrene Position die Abdeckkappe selbsttätig entlang des Randes der Karosserieöffnung ausrichtet. Damit wird, unabhängig von den Temperaturbedingungen, Toleranzen und alterungsbedingten Verformungen der beteiligten Kunststoffteile ein Toleranzausgleich zwischen der Abdeckkappe und dem Karosserieteil erreicht. Außerdem erübrigen sich aufwändige Einstellarbeiten bei der Erstmontage oder im Reparaturfall, da über die elastischen Elemente bzw. die Schwenkachse(n) jeweils selbsttätig die Zentrierung der Abdeckkappe in bzw. entlang der Karosserieöffnung erfolgt.

Vorteilhafte Ausgestaltungen der Erfindung sind Gegenstand der Unteransprüche.

Mögliche Ausführungsbeispiele der Erfindung sind in der Zeichnung dargestellt und werden nachfolgend näher beschrieben. Es zeigt:
- Fig. 1: einen Düsenträger mit erfindungsgemäßer Anbindung einer Abdeckkappe über elastische Elemente, in perspektivischer Ansicht,
- Fig. 2: den Gegenstand von Fig. 1, in Schnittdarstellung,
- Fig. 3: eine den Fig. 1 und 2 vergleichbare Ausführungsform eines Düsenträgers, in perspektivischer Darstellung,
- Fig. 4: den Düsenträger von Fig. 3, in Explosionsdarstellung,
- Fig.5: den Düsenträger von Fig. 3 im zusammengesetzten Zustand, in perspektivischer Darstellung,
- Fig.6: einen Düsenträger mit erfindungsgemäßer Anbindung einer Abdeckkappe über Schraubenfedern, in perspektivischer Darstellung,
- Fig. 7: ein weiteres Ausführungsbeispiel der Erfindung, mit zwei senkrecht zueinander angeordneten Schwenkachsen der Abdeckkappe, in perspektivischer Darstellung
- Fig. 8: das Ausführungsbeispiel von Fig. 7 in schematisierter Darstellung und
- Fig. 9: das Ausführungsbeispiel von Fig. 7 im Schnitt.

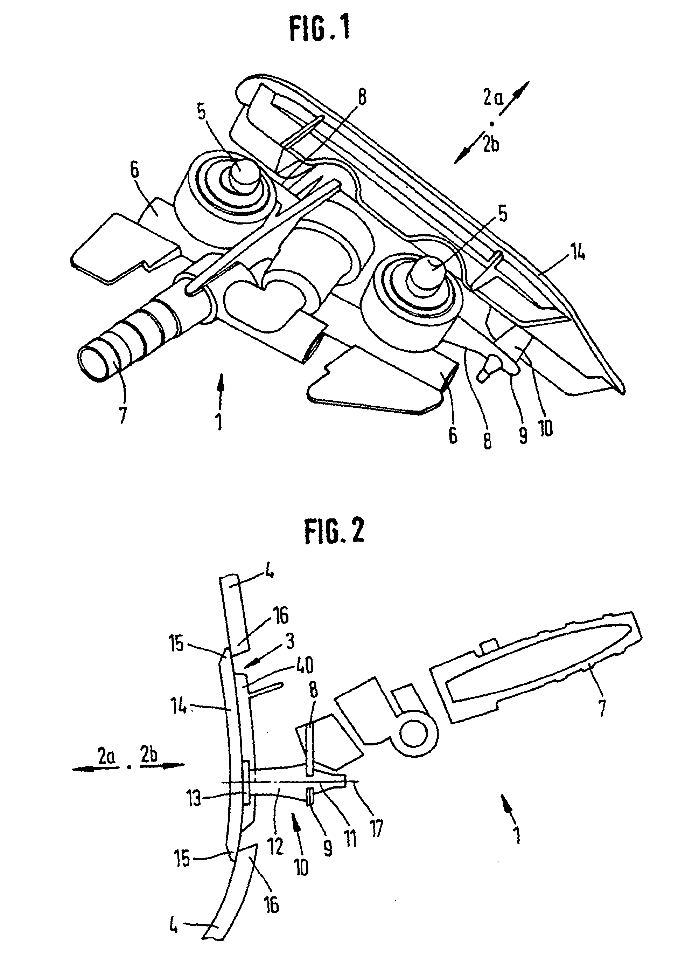

Die Fig. 1 und 2 zeigen einen Düsenträger 1 einer Scheinwerfer-Waschvorrichtung, der in Richtung der Pfeile 2a und 2b verstellbar ist und hierbei durch eine Öffnung 3 in einem Karosserieteil 4 eines Kraftfahrzeuges hindurchtritt. Die Öffnung 3 ist beispielsweise in einem Stoßfänger 4 ausgebildet. Der Düsenträger 1 trägt zwei Düsen 5, die über Rohre 6 sowie einen Rohrstutzen 7 mit Reinigungsflüssigkeit versorgt werden. Am Düsenträger 1 sind Befestigungsarme 8 vorgesehen, deren Enden ringförmige Aufnahmen 9 aufweisen, in die elastische Elemente 10 eingreifen. Die elastischen Elemente 10 bestehen beispielsweise aus einem Gummimaterial oder einem elastomeren Kunststoff. Sie weisen eine langgestreckte Form auf, mit einer Längsachse 17, und sind mit ihren Befestigungsbereichen 11 in die offene ringförmige Aufnahme 9 des Düsenträgers 1 formschlüssig eingesetzt. Die Fußbereiche 13 der Elemente 10 sind über eine Zwischenplatte 40 mit einer Abdeckkappe 14 verbunden, die die Karosserieöffnung 3 im eingefahrenen Zustand des Düsenträgers 1 verschließt.

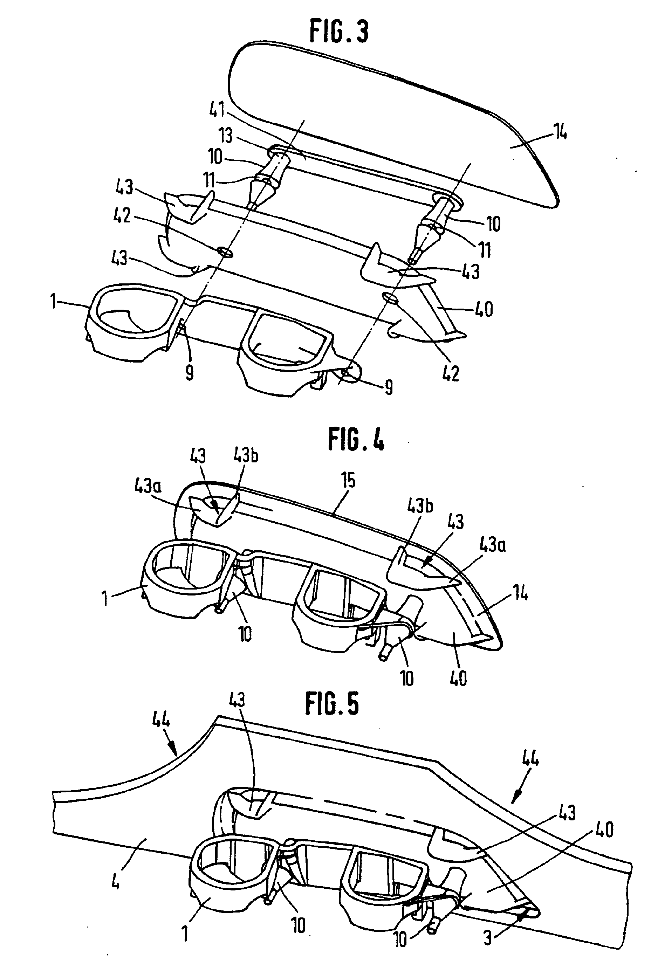

Beim Ausfahren des Düsenträgers 1 in Richtung des Pfeils 2a treten die Düsen 5 über die Kontur des Stoßfängers 4 hinaus. Die elastischen Elemente 10 sind so formsteif ausgelegt, daß sie auch bei höheren Fahrgeschwindigkeiten und dementsprechend großem Winddruck die Abdeckkappe 14 in ihrer ausgefahrenen Position lagerichtig halten. Das Einfahren des Düsenträgers 1 in Richtung des Pfeils 2b erfolgt, bis der überstehende Rand 15 der Abdeckkappe 14 entlang des Randes 16 der Karosserieöffnung 3 zur Anlage kommt und sich hierbei selbsttätig zentriert, wie anhand der Fig. 3 bis 5 näher dargestellt und beschrieben ist. Durch die elastischen Verformungsabschnitte 12 der Elemente 10 erfolgt hierbei ein Toleranzausgleich in der Ebene des Stoßfängers 4. In analoger Weise kann die Abdeckkappe 14 auch oberflächenbündig mit dem Stoßfänger 4 in der Öffnung 3 versenkt werden, wobei durch die Zentrierung ein gleichmäßiges Fugenbild erreicht wird.

Die Fig. 3 bis 5 zeigen ein Ausführungsbeispiel eines Düsenträgers 1, bei dem die Abdeckkappe 14 mit einer Zwischenplatte 40 verbunden ist, beispielsweise durch Verklebung. Bevor die Verbindung zwischen Abdeckkappe 14 und Zwischenplatte 40 erfolgt, werden die beiden elastischen Elemente 10, deren Fußbereiche 13 über einen Elemententräger 41 gekoppelt sind, durch Öffnungen 42 in der Zwischenplatte 40 hindurchgesteckt. Der Elemententräger 41 wird in einer Aussparung an der Vorderseite der Zwischenplatte 40 oberflächenbündig aufgenommen, wie aus der Schnittdarstellung der Fig. 2 näher hervorgeht. Die elastischen Elemente 10 greifen analog der Darstellung der Fig. 1 und 2 mit ihren Befestigungsbereichen 11 in Öffnungen 9 des Düsenträgers 1 ein.

An den Eckbereichen der Zwischenplatte 40 sind jeweils Zentriemasen 43 mit zwei etwa rechtwinklig zueinander ausgerichteten Flügeln 43a und 43b vorgesehen, die über den Rand der Zwischenplatte 40 hinausstehen und im zusammengesetzten Zustand zum Rand 15 der Abdeckkappe 14 beabstandet sind, wie insbesondere aus Fig. 4 hervorgeht. Fig. 5 veranschaulicht die Einbausituation des Düsenträgers 1, der in eine Öffnung 3 eines Stoßfängers 4 eingesetzt ist und durch die Zentriernasen 43 mittig in dieser Öffnung 3 ausgerichtet wird, wobei der Rand 15 der Abdeckkappe 14 den Rand 16 der Öffnung 3 im Stoßfänger 4 überdeckt. Zu beiden Seiten oberhalb der Öffnung 3 befinden sich im Stoßfänger 4 Ausschnitte 44 zur Aufnahme nicht dargestellter Scheinwerfer.

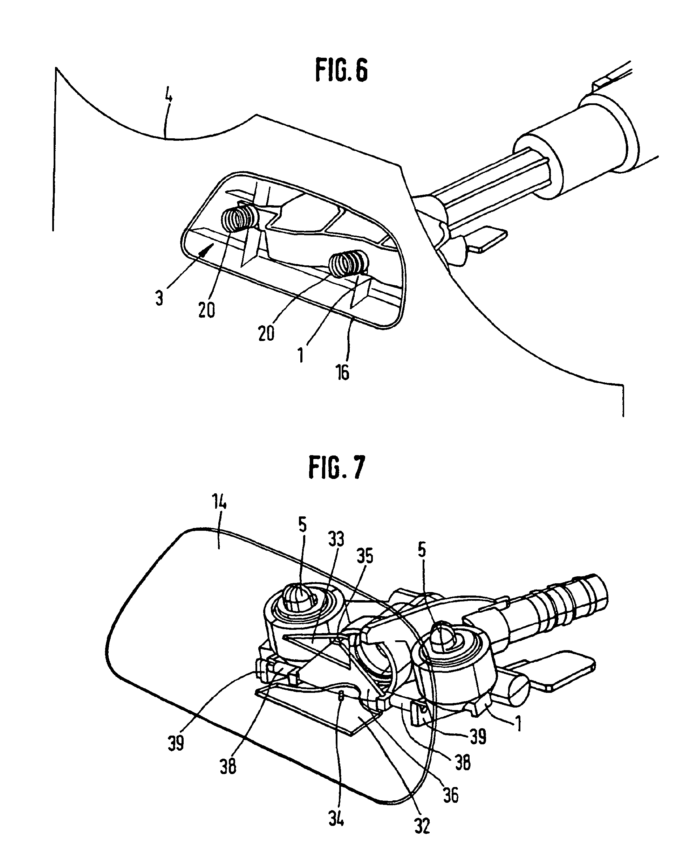

Fig. 6 zeigt ein Ausführungsbeispiel der Erfindung, bei dem zur Anbindung einer nicht dargestellten Abdeckkappe anstelle der Elemente 10 gemäß den Fig. 1 bis 5 metallische Schraubenfedern 20 eingesetzt sind. Im übrigen entspricht der Aufbau des Düsenträgers 1 den vorangegangenen Ausführungsbeispielen. Durch die Schraubenfedem 20 erfolgt in analoger Weise eine selbsttätige Zentrierung der Abdeckkappe 14 entlang des Randes 16 der Karosserieöffnung 3. Anstelle von Schraubenfedem 20 können auch andere Federelemente verwendet werden, auch solche aus nichtmetallischen Materialien.

Die Fig. 7 bis 9 zeigen ein weiteres.Ausführungsbeispiel der Erfindung, bei dem über eine vertikale sowie eine horizontale Schwenkachse 30 bzw. 31 eine schwenkbewegliche Anbindung der Abdeckkappe 14 an den Düsenträger 1 erfolgt. An der Rückseite der Abdeckkappe 14 sind zwei Befestigungslaschen 32 und 33 vorgesehen, mit Öffnungen, in die Stifte 34 und 35 eines dreieckförmigen Schwenkteils 36 eingreifen. Die Verbindungslinie zwischen den Stiften 34 und 35 definiert die Schwenkachse 30. In Verlängerung der Basis 37 des Schwenkteils 36 sind Lagerstifte 38 vorgesehen, die die Schwenkachse 31 festlegen. Die Lagerstifte 38 greifen in Lagerstellen 39 am Düsenträger 1 ein. Die rotatorischen Freiheitsgrade der Abdeckkappe 14 sind durch die Doppelpfeile V und H dargestellt.

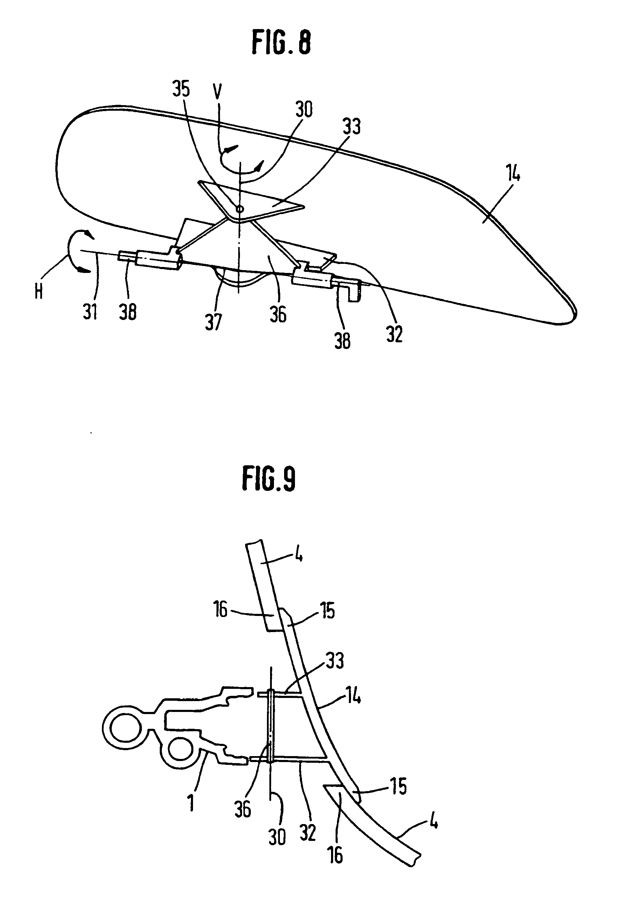

Durch die beiden Schwenkachsen 30 und 31 kann sich die Abdeckkappe 14 beim Einfahren des Düsenträgers 1 entsprechend dem Rand 16 der Karosserieöffnung 3 ausrichten, wodurch eine gleichmäßige Auflage entlang des Randes 16 erreicht wird. Insbesondere eignet sich diese Ausführungsform der Erfindung für solche Stoßfänger 4 oder ähnliche Karosserieteile 4, die eine nicht ebene Kontur aufweisen, da sich die Abdeckkappe 4 durch die Schwenkachsen 30 und 31 entsprechend der Krümmung der Kontur ausrichten kann. In diesen Fällen kann, wie in Fig. 9 veranschaulicht, der Rand 15 der Abdeckkappe 14 einen größeren Überstand über den Rand 16 der Karosserieöffnung 3 aufweisen, so daß Maßabweichungen in der Lage und/oder Größe der Karosserieöffnung 3 mit Sicherheit ausgeglichen werden können.

Die Anbindung der Abdeckkappe 14 gemäß den Fig. 7 bis 9 eignet sich, ebenso wie die vorstehend beschriebenen Ausführungsformen, in gleicher Weise für solche Einbausituationen, bei denen die Abdeckkappe 14 in einer Vertiefung des Karosserieteils 4 versenkt ist. Hier kann ein gleichmäßiges Fugenbild zur Karosserieöffnung 3 erreicht werden. Selbstverständlich können durch die Erfindung auch solche Abdeckkappen 14 spaftfrei gegenüber einer Karosserieöffnung 3 ausgerichtet werden, die mit nur sehr geringem Überstand am Rand 16 der Karosserieöffnung 3 aufliegen, wie in Fig. 2 dargestellt. Selbstverständlich ist auch eine Kombination von elastischen Elementen 10 (bzw. Schraubenfedem 20 oder dergleichen) und Schwenkachsen 30 und/oder 31 möglich.

## Patentansprüche

1. Düsenträger (1) mit einer Abdeckkappe (14), für eine Scheinwerfer-Waschvorrichtung mit wenigstens einer Düse (5) zur Reinigung einer Lichtscheibe eines Scheinwerfers eines Fahrzeuges, wobei der Düsenträger (1) aus einer eingefahrenen Position durch eine translatorische Bewegung in eine ausgefahrene Position verstellbar ist und mit der Verstellbewegung des Düsenträgers (1) dieser durch eine Karosserieöffnung (3) hindurchtritt, die in der eingefahrenen Position des Düsenträgers (1) durch die mit dem Düsenträger (1) mitbewegte Abdeckkappe (14) verschließbar ist, wobei die Abdeckkappe (14) über wenigstens ein elastisches Element (10) so mit dem Düsenträger (1) verbunden ist, dass sich die Abdeckkappe (14) beim Einfahren des Düsenträgers (1) selbsttätig in der Karosserieöffnung (3) oder entlang des Randes (16) der Karosserieöffnung (3) ausrichtet,
**dadurch gekennzeichnet, dass** das elastische Element (10) langgestreckt ist, mit einer Längsachse (17) etwa parallel zur Richtung (2a, 2b) der Verstellbewegung des Düsenträgers (1) und an wenigstens einem Endabschnitt (11, 13) so ausgebildet ist, dass es mit einer Aufnahme (9) an der Abdeckkappe (14) und/oder des Düsenträgers (1) verbindbar ist.

2. Düsenträger (1) nach Anspruch 1,
**dadurch gekennzeichnet, dass** ein Endabschnitt (11) des elastischen Elements (10) als Befestigungsbereich ausgebildet ist, der in eine ringförmige Aufnahme (9) des Düsenträgers (1) formschlüssig einsetzbar ist.

3. Düsenträger (1) nach Anspruch 1 und/oder 2,
**dadurch gekennzeichnet, dass** das elastische Element (10) aus einem Gummimaterial oder aus einem elastomeren Kunststoff besteht.

4. Düsenträger (1) mit einer Abdeckklappe (14), für eine Scheinwerfer-Waschvorrichtung mit wenigstens einer Düse (5) zur Reinigung einer Lichtscheibe eines Scheinwerfers eines Fahrzeuges, wobei der Düsenträger (1) aus einer eingefahrenen Position durch eine translatorische Bewegung in eine ausgefahrene Position verstellbar ist und mit der Verstellbewegung des Düsenträgers (1) dieser durch eine Karosserieöffnung (3) hindurchtritt, die in der eingefahrenen Position des Düsenträgers (1) durch die mit dem Düsenträger (1) mitbewegte Abdeckklappe (14) verschließbar ist, wobei die Abdeckklappe (14) über wenigstens ein elastisches Element (20) so mit dem Düsenträger (1) verbunden ist, dass sich die Abdeckklappe (14) beim Einfahren des Düsenträgers (1) selbsttätig in der Karosserieöffnung (3) oder entlang des Randes (16) der Karosserieöffnung (3) ausrichtet,
**dadurch gekennzeichnet, dass** das elastische Element von wenigstens einer Schraubenfeder (20) aus einem metallischen Werkstoff gebildet wird, deren Längsachse etwa parallel zur Richtung (2a, 2b) der Verstellbewegung des Düsenträgers (1) verläuft.

5. Düsenträger (1) nach einem der vorgenannten Ansprüche,
**dadurch gekennzeichnet, dass** das elastische Element (10) mit einer Zwischenplatte (40) verbunden ist, die ihrerseits an der Abdeckklappe (14) angeordnet ist.

6. Düsenträger (1) nach Anspruch 5,
**dadurch gekennzeichnet, dass** das elastische Element (10) durch eine Öffnung (42) in der Zwischenplatte (40) hindurch gesteckt ist und einen gegenüber seinem langgestreckten Körper verbreiterten Fußbereich (13) aufweist, der die Zwischenplatte (40) hintergreift.

7. Düsenträger (1) mit einer Abdeckkappe (14), für eine Scheinwerfer-Waschvorrichtung mit wenigstens einer Düse (5) zur Reinigung einer Lichtscheibe eines Scheinwerfers eines Fahrzeuges, wobei der Düsenträger (1) aus einer eingefahrenen Position durch eine translatorische Bewegung in eine ausgefahrene Position verstellbar ist und mit der Verstellbewegung des Düsenträgers (1) dieser durch eine Karosserieöffnung (3) hindurchtritt, die in der eingefahrenen Position des Düsenträgers (1) durch die mit dem Düsenträger (1) mitbewegte Abdeckkappe (14) verschließbar ist, wobei
- die Abdeckkappe (14) über zwei etwa senkrecht zueinander angeordnete Schwenkachsen (30, 31) so mit dem Düsenträger (1) verbunden ist, dass sich die Abdeckkappe beim Einfahren des Düsenträgers (1) selbsttätig in der Karosserieöffnung (3) oder entlang des Randes (16) der Karosserieöffnung (3) ausrichtet,
- die eine Schwenkachse (30) durch an der Rückseite der Abdeckkappe (14) vorgesehene Befestigungslaschen (32, 33) gebildet wird, in die Stifte (34, 35) eines Schwenkteils (36) eingreifen, wobei die Verbindungslinie zwischen den Stiften (34, 35) die Schwenkachse (30) definiert, und
- die andere Schwenkachse (31) durch Lagerstifte (38) am Schwenkteil (36) festgelegt ist, die in Lagerstellen (39) am Düsenträger (1) eingreifen.

8. Düsenträger (1) nach einem der vorgenannten Ansprüche,
**dadurch gekennzeichnet, dass** an der Abdeckkappe (14) und/oder an der Zwischenplatte (40) wenigstens eine Zentriereinrichtung (43) zur Ausrichtung der Abdeckkappe (14) in der Karosserieöffnung (3) oder entlang des Randes (16) der Karosserieöffnung (3) vorgesehen ist.

## Claims

1. A nozzle holder (1) with a cover cap (14) for a headlamp washing device, comprising at least one nozzle (5) for cleaning a light-emitting face of a vehicle headlamp, wherein the nozzle holder (1) is movable in translation from a retracted position into an extended position and as a result of the movement, the nozzle holder (1) travels through a car-body opening (3) which is closable by the cover cap (14) entrained by the nozzle holder (1) when the nozzle holder (1) is in the retracted position, wherein the cover cap (14), via at least one resilient element (10), is so connected to the nozzle holder (1) that when the nozzle holder (1) is retracted, the cover cap (14) is automatically aligned in the body opening (3) or along the edge (16) of the body opening (3),
**characterised in that** the resilient component (10) is elongate, with a longitudinal axis (17) approximately parallel to the direction (2a, 2b) of motion of the nozzle holder (1) when adjusted, and at least one end portion (11, 13) is shaped so that it is connectable to a receiver (9) on the cover cap (14) and/or the nozzle holder (1).

2. A nozzle holder (1) according to claim 1,
**characterised in that** an end portion (11) of the resilient element (10) is in the form of a fastening region which is positively insertable into an annular receiver (9) on the nozzle holder (1).

3. A nozzle holder (1) according to claim 1 and/or 2,
**characterised in that** the resilient element (10) is made of a rubber material or of an elastomeric plastics material.

4. A nozzle holder (1) with a cover flap (14) for a headlamp washing device, comprising at least one nozzle (5) for cleaning a light-emitting face of a vehicle headlamp, wherein the nozzle holder (1) is movable in translation from a retracted position into an extended position and as a result of the movement, the nozzle holder (1) travels through a car-body opening (3) which is closable by the cover flap (14) entrained by the nozzle holder (1) when the nozzle holder (1) is in the retracted position, wherein the cover flap (14), via at least one resilient element (20), is so connected to the nozzle holder (1) that when the nozzle holder (1) is retracted, the cover flap (14) is automatically aligned in the body opening (3) or along the edge (16) of the body opening (3), **characterised in that** the resilient element comprises at least one helical spring (20) made of a metal material and having its longitudinal axis approximately parallel to the direction (2a, 2b) of motion of the nozzle holder (1) when adjusted.

5. A nozzle holder (1) according to any of the preceding claims,
**characterised in that** the resilient component (10) is connected to an intermediate plate (40) disposed on the cover flap (14).

6. A nozzle holder (1) according to claim 5,
**characterised in that** the resilient element (10) is inserted through an opening (42) in the intermediate plate (40) and has a foot region (13) which is wider than its elongate body and engages behind the intermediate plate (40).

7. A nozzle holder (1) with a cover cap (14) for a headlamp washing device, comprising at least one nozzle (5) for cleaning a light-emitting face of a vehicle headlamp, wherein the nozzle holder (1) is movable in translation from a retracted position into an extended position and as a result of the movement, the nozzle holder (1) travels through a car-body opening (3) which is closable by the cover cap (14) entrained by the nozzle holder (1) when the nozzle holder (1) is in the retracted position,
- wherein the cover cap (14), via approximately mutually perpendicular axes (30, 31) of rotation, is so connected to the nozzle holder (1) that when the nozzle holder (1) is retracted, the cover cap (14) is automatically aligned in the body opening (3) or along the edge (16) of the body opening (3),
- one axis of rotation (30) is embodied by lugs (32, 33) on the back of the cover cap (14) for engagement of pins (34, 35) in a rotary part (36), wherein the line joining the pins (34, 35) defines the axis of rotation (30), and
- the other axis of rotation (31) is defined by hinge pins (38) on the rotary part (36) which engage in bearings (39) on the nozzle holder (1).

8. A nozzle holder (1) according to any of the preceding claims,
**characterised by** at least one sensoring device (43) is provided on the cover cap (14) and/or on the intermediate plate (40) for aligning the cover cap (14) in the body opening (3) or along the edge (16) of the body opening (3).

## Revendications

1. Porte-gicleur (1) comportant un capuchon (14), pour un dispositif de lavage de phares ayant au moins un gicleur (5) pour le lavage du verre d'un phare d'un véhicule, le porte-gicleur (1) pouvant être décalé par un mouvement translatoire d'une position escamotée à une position sortie et, avec le mouvement de décalage du porte-gicleur (1), celui-ci traverse un orifice de la carrosserie (3) qui peut être obturé, lorsque le porte-gicleur (1) est en position escamotée, par le capuchon (14) déplacé en même temps que le porte-gicleur (1), le capuchon (14) étant relié au porte-gicleur (1) par au moins un élément élastique (10) de manière à ce que le capuchon (14) s'oriente de manière autonome dans l'orifice de carrosserie (3) ou le long du bord (16) de l'orifice de carrosserie (3) lors de l'escamotage du porte-gicleur (1),
**caractérisé en ce que**
l'élément élastique (10) est allongé, son axe longitudinal (17) étant approximativement parallèle au sens (2a, 2b) de déplacement du porte-gicleur (1) et sur au moins un segment d'extrémité (11, 13) de manière à pouvoir être relié à un logement (9) sur le capuchon (14) et/ou le porte-gicleur (1).

2. Porte-gicleur (1) selon la revendication 1,
**caractérisé en ce qu'**
un segment d'extrémité (11) de l'élément élastique (10) est une zone de fixation qui peut être introduite, par complémentarité de forme, dans un logement annulaire (9) du porte-gicleur (1) .

3. Porte-gicleur (1) selon la revendication 1 et/ou 2,
**caractérisé en ce que**
l'élément élastique (10) est constitué d'un caoutchouc ou d'une matière plastique élastomère.

4. Porte-gicleur (1) comportant un capuchon (14), pour un dispositif de lavage de phares ayant au moins un gicleur (5) pour le lavage d'un verre d'un phare d'un véhicule, le porte-gicleur (1) pouvant être décalé par un mouvement translatoire d'une position escamotée à une position sortie et, avec le mouvement de décalage du porte-gicleur (1), celui-ci traverse un orifice de la carrosserie (3) qui peut être obturé, lorsque le porte-gicleur (1) est en position escamotée, par le capuchon (14) déplacé en même temps que le porte-gicleur (1), le capuchon (14) étant relié au porte-gicleur (1) par au moins un élément élastique (10) de manière à ce que le capuchon (14) s'oriente de manière autonome dans l'orifice de carrosserie (3) ou le long du bord (16) de l'orifice de carrosserie (3) lors de l'escamotage du porte-gicleur (1),
**caractérisé en ce que**
l'élément élastique (10) est constitué d'au moins un ressort cylindrique (20) fabriqué dans une matière métallique dont l'axe longitudinal est approximativement parallèle au sens (2a, 2b) du mouvement de décalage du porte-gicleur (1).

5. Porte-gicleur (1) selon l'une des revendications précédentes,
**caractérisé en ce que**
l'élément élastique (10) est relié à une plaque intermédiaire (40) disposée sur le capuchon (14).

6. Porte-gicleur (1) selon la revendication 5,
**caractérisé en ce que**
l'élément élastique (10) est introduit à travers l'orifice (42) dans la plaque intermédiaire (40), il présente un pied de montage (13), élargi par rapport à son corps allongé, qui saisit la plaque intermédiaire (40) par derrière.

7. Porte-gicleur (1) comportant un capuchon (14), pour un dispositif de lavage de phares ayant au moins un gicleur (5) pour le lavage du verre d'un phare d'un véhicule, le porte-gicleur (1) pouvant être décalé par un mouvement translatoire d'une position escamotée à une position sortie et, avec le mouvement de décalage du porte-gicleur (1), celui-ci traverse un orifice de la carrosserie (3) qui peut être obturé, lorsque le porte-gicleur (1) est en position escamotée, par le capuchon (14) déplacé en même temps que le porte-gicleur (1),
- le capuchon (14) étant relié au porte-gicleur (1) par deux axes de pivotement (30, 31) approximativement perpendiculaires l'un par rapport à l'autre, de manière à ce que le capuchon (14) s'oriente de manière autonome dans l'orifice de carrosserie (3) ou le long du bord (16) de l'orifice de carrosserie (3) lors de l'escamotage du porte-gicleur (1),
- l'un des axes de pivotement (30) étant formé par des éclisses de fixation (32, 33) prévues à l'arrière du capuchon (14), dans lesquelles s'engagent des tiges (34, 35) d'une partie pivotante (36), la ligne de liaison entre les tiges (34, 35) définissant l'axe de pivotement (30), et
- l'autre axe de pivotement (31) étant défini sur la partie pivotante (36) par des tiges de positionnement (38) qui s'engagent dans des coussinets (39) sur le porte-gicleur (1).

8. Porte-gicleur (1) selon l'une des revendications précédentes,
**caractérisé en ce que**
sur le capuchon (14) et/ou sur la plaque intermédiaire (40), on prévoit au moins un dispositif de centrage (43) permettant l'orientation du capuchon (14) dans l'orifice de carrosserie (3) ou bien le long du bord (16) de l'orifice de carrosserie (3).
